# EUROPEAN PATENT SPECIFICATION

(11) **EP 3 357 223 B1**
(45) Date of publication and mention of the grant of the patent: **20.08.2025**
(21) Application number: 16852667.1
(22) Date of filing: 30.09.2016
(51) Int. Cl.: G06F 1/16, G06F 3/041, G06F 3/044, G04G 17/06, H04M 1/04, H04B 1/02, H04B 1/04, H04B 1/06

(54) **SYSTEMS, DEVICES, AND METHODS OF MULTIPLEXED USE OF A CONDUCTIVE HOUSING**
SYSTEME, VORRICHTUNGEN UND VERFAHREN ZUR MULTIPLEXVERWENDUNG EINES LEITENDEN GEHÄUSES
SYSTÈMES, DISPOSITIFS ET PROCÉDÉS D'UTILISATION MULTIPLEXÉE D'UN BOÎTIER CONDUCTEUR

(30) Priority: 30.09.2015 US 201562235469 P
(43) Date of publication of application: 08.08.2018
(73) Proprietor: Google LLC, Mountain View, CA 94043 (US)
(72) Inventor: RUDOLPH, Aaron Michael, Auburn, California 95603 (US); DIAMOND, Steven, San Francisco, California 94110 (US); MONTGOMERY, Matthew Ryan, Palo Alto, California 94301 (US); MACK, Adam Mekeel, Menlo Park, California 94025 (US)
(74) Representative: Thorniley, Peter
(86) International application number: PCT/US2016/054632
(87) International publication number: WO 2017/059182

(56) References cited:
- US-A1- 2006 035 620
- US-A1- 2006 035 620
- US-A1- 2012 287 003
- US-A1- 2012 287 003
- US-A1- 2012 329 524
- US-A1- 2013 035 103
- US-A1- 2013 045 700
- US-A1- 2013 231 046
- US-A1- 2013 244 731
- US-A1- 2014 206 327
- US-A1- 2014 206 327

## Description

### Cross-Reference to Related Applications

This application claims priority to and the benefit of U.S. Provisional Application No. 62/235,469, filed on September 30, 2015, entitled, "SYSTEMS, DEVICES AND METHODS OF MULTIPLEXED USE OF A CONDUCTIVE CASING".

This application is also related to U.S. Provisional Application No. 62/235,467 entitled "SYSTEMS, DEVICES AND METHODS OF USING A CONDUCTIVE CASING FOR A BATTERY CONTACT'', filed on September 30, 2015, to U.S. Provisional Application No. 62/235,526 entitled "METHODS AND APPARATUSES FOR SIMULATANEOUSLY EXCHANGING MESSAGES BETWEEN A LOW-ENERGY RADIO DEVICE AND MULTIPLE CENTRAL DEVICES", filed on September 30, 2015, and to U.S. Provisional Application No. 62/235,472 entitled "SYSTEMS, DEVICES AND METHODS OF DETECTION OF USER INPUT', filed on September 30, 2015.

### Background

Wearable devices can be generally characterized as body-worn and/or body-associated devices. Capacitive sensing approaches find use in wearable devices as a means of user input. Typically, a surface, such as an enclosure or housing, of the wearable device is made touch-sensitive via capacitive sensing for purposes of receiving user input.

The use of a large, touch-sensitive casing, however, minimizes the space available on the surface/exterior of the device to accommodate other aspects of device operation, such as, for example, an antenna. Antennas are a typical feature/requirement of wearable devices for wireless communication with external devices. While one solution could be to internalize the antenna into the body of the device, a conductive housing can substantially block/hinder the wireless signal from the antenna.

There is hence an unmet need to improve use of the conductive housing of a wearable device for different aspects of device operation.

US 2013/231046 A1 teachings involve an electronic device that may have electrical components such as sensors. A sensor may have sensor circuitry that gathers sensor data using a conductive structure. The sensor may be a touch sensor that uses the conductive structure to form a capacitive touch sensor electrode or may be a fingerprint sensor that uses the conductive structure with a fingerprint electrode array to handle fingerprint sensor signals. Near field communications circuitry may be included in an electronic device. When operated in a sensor mode, the sensor circuitry may use the conductive structure to gather a fingerprint or other sensor data. When operated in near field communications mode, the near field communications circuitry can use the conductive structure to transmit and receive capacitively coupled or inductively coupled near field communications signals. A fingerprint sensor may have optical structures that communicate with external equipment.

US 2006/035620 A1 discloses an adaptive band-pass filter for a wireless receiver that comprises a band-pass filter associated with the receiver, the band-pass filter configured to selectively filter the received signal, and a switch responsive to a control signal, the switch configured to control the band-pass filter based on a level of the received signal.

US 2014/206327 A1 discloses a processor-based personal electronic device (such as a smartphone) that is programmed to automatically respond to data sent by various sensors from which the user's activity may be inferred. One or more of the sensors may be worn by the user and remote from the device. A wireless communication link may be used by the device to obtain remote sensor data. Data from on-board sensors in the device - such as motion sensors, location sensors, and the like - may also be used to deduce the user's current activity.

US 2012/287003 A1 discloses a portable electronic device that includes a first housing, a second housing to the first housing, a circuit board, a display module, a touch panel, a near filed communication (NFC) module, and a NFC antenna. The circuit board, the display module, the touch panel, the NFC module and the NFC antenna are orderly mounted in a space between the first housing and the second housing. The NFC antenna is set around the touch panel or at one side of the touch panel or the NFC module.

### Summary

The present disclosure provides a wearable device as set out in claim 1.

Optional features are set out in the dependent claims.

It should be appreciated that terminology explicitly employed herein that also may appear in any disclosure incorporated by reference should be accorded a meaning most consistent with the particular concepts disclosed herein.

Other systems, processes, and features will become apparent to those skilled in the art upon examination of the following drawings and detailed description, but form part of the invention solely when they fall within the scope of the appended claims.

### Brief Description of the Drawings

The skilled artisan will understand that the drawings primarily are for illustrative purposes and are not intended to limit the scope of the inventive subject matter described herein. The drawings are not necessarily to scale; in some instances, various aspects of the inventive subject matter disclosed herein may be shown exaggerated or enlarged in the drawings to facilitate an understanding of different features. In the drawings, like reference characters generally refer to like features (e.g., functionally similar and/or structurally similar elements).
FIG. 1 is an illustration of a device including a control circuit, according to an embodiment.
FIG. 2 is also an illustration of a device, according to other embodiments.
FIG. 3 is an illustration of a device with filter blocks, according to an embodiment.
FIGS. 4A-4B illustrate exchange of control signals between circuits, according to an embodiments. FIG. 4A illustrates a control signal from a first circuit to a second circuit. FIG. 4B illustrates a control signal from the second circuit to the first circuit.
FIG. 5 is a flowchart illustrating a method for operating the housing of a device, according to an embodiment.
FIG. 6 is a flowchart illustrating a method, according to another embodiment.

### Detailed Description

The present disclosure describes systems, devices and methods for improving the use of the conductive housing of a wearable device for different aspects of device operation. Control circuit(s) coupled to the conductive housing can be configured to operate the housing in multiple configurations. Embodiments described herein reduce form factor of wearable devices by optimizing the use of conductive housing of the wearable devices.

As used in this specification, the singular forms "a," "an" and "the" include plural referents unless the context clearly dictates otherwise. Thus, for example, the term "a contact" is intended to mean a single contact or a plurality/combination of contacts.

In some embodiments, a device (also referred to as a "wearable device", or a "personal fitness device") includes a cover, casing, housing or a shell, and/or the like ("housing" hereon), that covers at least a portion of the device. Accordingly, the term "housing" as used herein can refer to a portion of such a cover, one or more continuous or discontinuous portions of a cover, or the entirety thereof. In some embodiments, the housing, or at least a portion thereof, is substantially electrically conductive in nature. The housing can be constructed of any suitable, electrically conductive material such as stainless steel, aluminum, copper, conductive polymers, composites that include conductive additives (e.g., graphene), conductor-coated glass (e.g.. with indium-tin-oxide, similar to capacitive touch screens), combinations thereof, and/or the like. In some embodiments, the housing can be associated with an electrically conductive component. In some embodiments, the housing can be constructed from a single continuous conductive material. In other embodiments, the housing can be constructed from two or more conductive materials that are fused, linked, coupled, soldered and/or welded together.

In some embodiments, the housing is connected, linked, and/or otherwise coupled to one or more device components, such as electronic circuits for example, associated with the device. In some embodiments, each of the device components/electronic circuits is configured to employ the housing to perfonn its intended/desired operation. For example, one of the device components/electronic circuits can be a capacitive-touch circuit which, when coupled to the conductive housing, is configured to accept user input via touch detection on the conductive casing. As another example, one of the device components/electronic circuits can be a radio-frequency (RF) circuit which, when coupled to the conductive housing, is configured for bi-directional, RF communication with external devices. In some embodiments, the device can further include one or more device components/electronic circuits that are not connected, linked, and/or otherwise coupled to the housing.

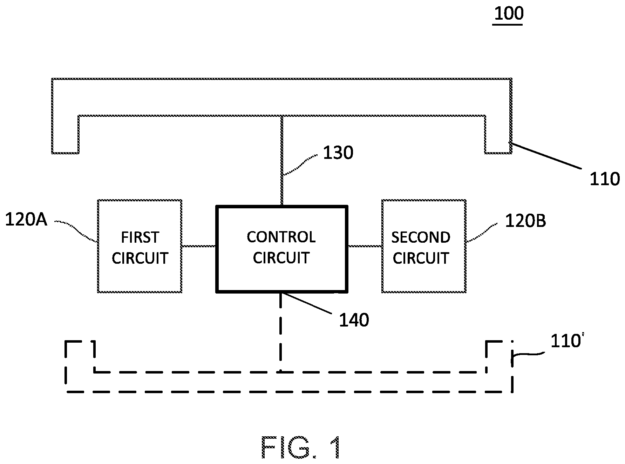

FIG. 1 is a conceptual illustration of a device 100, according to an embodiment. In some embodiments, the device 100 is operable for use by a user for collecting user-specific information, such as user input, fitness-related information, biometric information, and/or the like. In some embodiments, the device 100 can include a personal fitness device or activity tracker such as, but is not limited to, a pedometer, a physiological monitor such as a heart rate monitor, a respiration monitor, a GPS system (including GPS watches), and/or the like. The device 100 includes a housing 110, a first circuit 120A coupled to the housing 110, and second circuit 120B coupled to the housing 110. The device 100 further includes a control element 140 (shown in FIG. 1 as a control circuit) disposed between the first circuit 120A and the second circuit 120B. The control circuit 140 is coupled to the housing 110. The device 100 can include additional device components/electronic circuits coupled to the housing 110 (not shown) such as, for example a wireless module (e.g., WiFi, Bluetooth, and/or the like), any RF generating module, any module for detecting/transmitting signals via the housing 110 (e.g., using the housing as an electrode), a power storage module (e.g., for receiving/transmitting power via the housing 110), and other device components not coupled to the housing 110 (not shown).

In some embodiments, and as illustrated in FIG. 1. the housing 110 can be a first housing/portion 110, and the device 100 can (optionally, as indicated by dotted lines) further include a second housing 110'. In some embodiments, the first housing 110 and the second housing 110' can each be conductively coupled to the device components/electronic circuits included in the device 100. For example, in some embodiments, the first circuit 120A, control circuit 140 and second circuit 120B can be conductively coupled to the first housing 110. or to the second housing 110', or both. In some embodiments, the first housing 110 and/or the second housing 110' can each be independently isolated from the device components/electronic circuits included in the device 100.

While the first circuit 120A. the second circuit 120B and the control circuit 140 are illustrated as coupled to the housing 110 via a common link 130, it is understood that, in alternative embodiments, each may be independently coupled to the housing. Further, while the first circuit 120A and the second circuit 120B are illustrated as coupled to each other via a control circuit 140 in FIG. 1, in some embodiments, there is no coupling therebetween. The link 130 can be wired or wireless. In some embodiments, the link 130 can include one or more electronic connectors, such as resilient electronic connectors for example, to ensure connectivity. In some embodiments (not shown), the link 130 can include additional elements such as resistive elements, reactance elements (e.g., an inductor and/or, a capacitor), analog to digital converters, amplifiers, filters, combinations thereof, and/or the like.

The housing 110 can be any suitable electrically conductive medium. In some embodiments, the housing 110 can include a single continuous component. In some embodiments, the housing 110 can include multiple conductive components/portions, and further include insulating components in between the conductive components. For example, the housing 110 can include dielectric material formed between two conducting portions. In some embodiments, the housing 110 can include one or more insulating layers that include anodized parts/components that enable conduction via the insulating layers. In some embodiments, the housing 110 can include two components/portions (e.g., the first housing 110 in FIG. 1 and the second housing 110' in FIG. 1) that are conductively isolated from each other. In some embodiments, the housing 110 can include two or more conducting portions, and the reference character 110 can represent one of the conducting portions. In some embodiments, one portion of the housing 110 is removable, such as, for example, for purposes of removing/replacing a power source such as a coin cell, making repairs to the device 100. and/or the like. In some embodiments, the housing 110 can be designed as a saucer-shaped structure having a convex surface.

The first circuit 120A and/or the second circuit 120B can be any suitable device component/electronic circuit that can access the conductive capabilities of the housing 110. In some embodiments, the first circuit 120A and/or the second circuit 120B can include active elements such as, for example, vacuum tubes, transistors, silicon-controlled rectifiers (SCRs), bidirectional triode thyristors, and/or the like. In some embodiments, one or both of the first circuit 120A and second circuit 120B can include passive elements such as, for example, resistors, capacitors, inductors, diodes, transformers, and/or the like.

In some embodiments, each of the first circuit 120A and the second circuit 120B can independently be a capacitive-touch circuit, a wireless transmission circuit such as an RF circuit, a power storage module, and/or the like. In some embodiments, the first circuit 120A can be any suitable circuit configured to sense and/or analyze touch events received at the housing 110. In some embodiments, the first circuit 120A is a capacitive-touch circuit, such as a printed board circuit. The capacitive-touch circuit can include and/or encompass one or more of capacitive switches, an RC network, a square-wave generator, a comparator circuit, and/or the like. In some embodiments, the first circuit 120A includes a driver circuit that is conductively coupled to the housing 110 (e.g., directly, or via one or more filter blocks).

The second circuit 120B can be any suitable circuit configured to receive and/or transmit RF signals via the housing 110. In some embodiments, the second circuit 120B is a RF circuit that includes at least one receiver module and one transmitter module. In some embodiments, the second circuit 120B is configured to generate RF signals that can be re-radiated by the housing 110. The RF circuit can include an RF receiver-transmitter pair, an antenna, crystal oscillator, an integrated circuit chip, combinations thereof, and/or the like. In some embodiments, the second circuit 120B includes a driver circuit that is conductively coupled to the housing 110 (e.g., directly, or via one or more filter blocks).

When an electronic circuit is formed that that includes the housing 110 and further includes one or more of the device components/electronic circuits described herein, the housing can be said to attain a specific configuration. For instance, when the first circuit 120A forms a complete electronic circuit with the housing 110, the housing 110 can be considered to have attained a first configuration. Similarly, when the second circuit 120B forms a complete circuit with the housing 110, the housing 110 can be considered to have attained a second configuration. In some embodiments, the first circuit is a capacitive touch circuit, and in the first configuration, the housing 110 can be used to analyze touch events/inputs from the user. In some embodiments, the second circuit is a RF transmission circuit, and in the second configuration, the housing 110 can be used to transmit and receive radio signals from an external device.

As illustrated in FIG. 1, the device 100 can include a control circuit 140 (also sometimes referred to as a "control element" or a "third circuit") can be any suitable circuit configured to control the operation of the housing 110 in multiple configurations. In some embodiments, the control circuit 140 can be configured to manually control the operation of the housing 110 in multiple configurations via user-interactions. For example, the control circuit 140 can include a capacitive element that senses and analyzes user interactions such as tapping the device 100 to switch between multiple configurations. In some embodiments, the control circuit 140 can be configured to automatically control the operation of the housing 110 in multiple configurations via a controller unit. For example, the control circuit 140 can include a processor configured to compare and analyze metrics associated with the first circuit 120A and/or second circuit 120B to enable the housing to attain one or more specific configurations. In some embodiments, the control circuit 140 can be configured to control the operation of the housing 110 in multiple configurations via user-interaction and/or in an automated manner, such as via a processor/controller. In some embodiments, the control circuit 140 can include a capacitive element and a processor. The capacitive element can be configured to initiate or start the device 100 based on user interaction, while the processor can control access to the housing 110 to permit the housing to attain a specific configuration. In some embodiments, the control circuit 140 can include an electrical relay or a switch configured to switch the operation of the housing from a first configuration to a second configuration. In some embodiments, the control circuit 140 can include one or more filters such as a high pass filter, a low pass filter, a band pass filter, a notch filter, combination thereof, and/or the like. In some embodiments, the control circuit 140 includes software, such as embedded software or firmware for example, configured to maintain the housing 110 in a particular configuration for a pre-determined amount of time, to switch the housing 110 to a particular configuration based on a request from the first circuit 120A and/or the second circuit 120B, and/or the like.

In some embodiments, the control circuit 140 can be configured such that, at any given time, one of the first circuit 120A or the second circuit 120B has access to the housing 110. In some embodiments, the control circuit 140 can be configured such that, at any given time, both the first circuit 120A and the second circuit 120B have access to the housing 110.

In some embodiments, the control circuit 140 facilitates the operation of the housing 110 in multiple configurations by selectively providing the first circuit 120A and the second circuit 120B access to the housing 110. Providing access to the housing 110 completes an electronic circuit between the housing and either the first circuit 120A or the second circuit 120B. In some embodiments, the control circuit 140 can provide the first circuit 120A access to the housing 110, thereby operating the housing in a first configuration. The first circuit 120A can be provided access by conductively coupling the first circuit 120A to the housing 110 while conductively isolating the second circuit 120B from the housing 110. Similarly, the control circuit 140 can provide the second circuit 120B access to the housing 110 thereby operating the housing 110 in a second configuration The second circuit 120B can be provided access by conductively coupling the second circuit 120B to the housing 110 while conductively isolating the first circuit 120A from the housing 110. In some embodiments, access to the housing 110 can be enabled y the control circuit 140 by sending or receiving signals to/from the housing 110, transmitting signals between the first and second circuits 120A-B, transmitting signals between the first circuit 120A, the housing 110 and/or the second circuit 120B, and/or by employing an internal switch mechanism.

In some embodiments, by selectively providing the first circuit 120A and the second circuit 120B access to the housing, the housing 110 can be alternately employed for capacitive touch input and for radio frequency transmission and/or reception. In some embodiments, by operating the housing 110 in the first configuration, the housing 110 can be employed as a capacitive touch circuit. Additionally, the housing can be employed for radio frequency transmission and/or reception by operating the housing 110 in the second configuration.

During use, the first circuit 120A and the second circuit 120B can be configured via the control circuit 140 for shared/multiplexed use of the housing 110, such that, at any given time, at most one of the first circuit 120A and the second circuit 120B are using and/or have access to the housing 110. In this manner, redundancy is reduced and use of the housing 110 can be optimized. As illustrated in FIG. 1, in some embodiments, the first circuit 120A and the second circuit 120B can be in communication via the control circuit 140 to effect multiplex use of the housing 110. In some embodiments, the control circuit 140 can be configured to provide the first circuit 120A and the second circuit 120B access to the housing 110 at the same time.

FIG. 1 and other embodiments described herein illustrate multiplex use of the housing with a first electronic circuit and a second electronic circuit for the sake of simplicity. It is understood that the device 100 can include multiple electronic circuits that desire and/or need access to the conductive capabilities of housing at any given time, which can be enabled by embodiments described herein. In this manner, the housing can operate in three, four, five, six, seven, or more than seven configurations. depending on the number of electronic circuits accessing the housing for multiplex use. Accordingly, the devices and methods described herein are extendible to any number of electronic circuits and configurations of the housing.

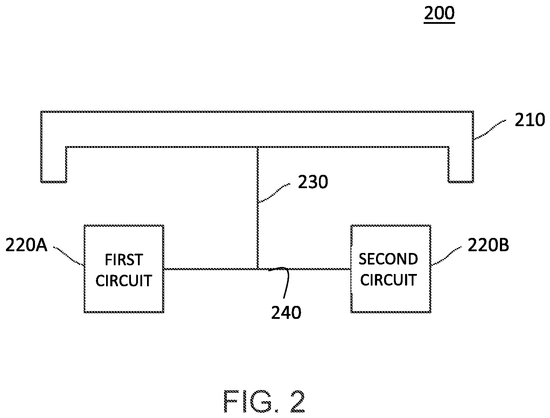

FIG. 2 is a schematic illustration of a device 200 that can be functionally similar to device 100 as shown in FIG.1, according to some embodiments. The device includes a housing 210, a first circuit 220A (e.g.. similar to the first circuit 120A in FIG.1) coupled to the housing 210, and a second circuit 220B (e.g., similar to the second circuit 120B in FIG. 1) also coupled to the housing 210. The first circuit 220A and the second circuit 220B are connected to the housing 210 via a common link 230. In the embodiment of FIG. 2. the first circuit 220A and the second circuit 220B are illustrated as being in direct communication with each other via a communication link 240.

During use, the first circuit 220A, the second circuit 220B and the control circuit 240 are collectively configured for shared/multiplexed use of the housing 210, such that, at any given time, at most one of the first circuit 220A and the second circuit 220B are using and/or have access to the housing 210. As illustrated in FIG. 2, in some embodiments, the first circuit 220A and the second circuit 220B can be in direct communication via the communication link 240 to effect multiplex use of the housing 210. In some embodiments, the multiplex use of the housing 210 can be enabled by communicating multiplexing signals/control signals between the first circuit 220A and the second circuit 220B via the communication link 240. The housing 210 can be operated in configurations similar to the housing 110 in the device 100 as illustrated in FIG. 1 and described above. In this manner, when the first circuit 220A and the second circuit 220B include capabilities for managing use of the housing, no additional circuitry is necessary for overseeing access to the housing 110.

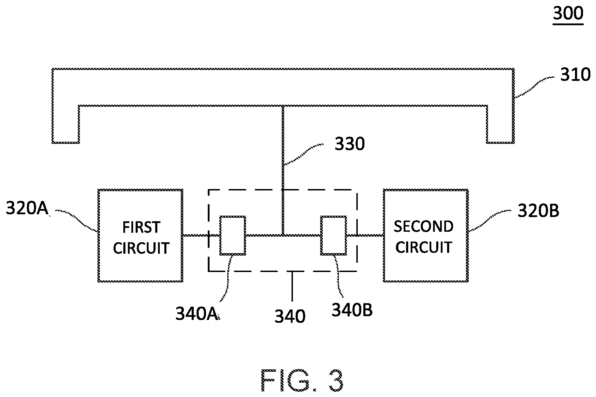

FIG. 3 is a schematic illustration of the device 300 that can be functionally similar to device 100 and/or the device 200. according to some embodiments. The device includes a housing 310, a first circuit 320A (e.g., similar to the first circuit 120A and/or the first circuit 220A) and a second circuit 320B (e.g., similar to the second circuit 120B and/or the second circuit 220B) both coupled to the housing 310. The device further includes a first filter 340A and a second filter 340B. The first filter 340A is coupled to the first circuit 320A and the housing 310. The second filter 340B is coupled to the second circuit 320B and the housing 310. The first filter 340A and second filter 340B are coupled to the housing 310 via a common link 330. In some embodiments, the first filter 340A and the second filter 340B can optionally encompass, or be a part of, a control circuit 340 (e.g., similar to the control circuit 140).

Each of the filters 340A, 340B can independently be a low pass filter. a high pass filter. a band-pass filter, a notch filter, and/or any filter suitable for permitting passage of a desired signal, and/or a component thereof. In some embodiments, one of the filters 340A, 340B is a high pass filter, and the other of the filters 340A, 340B is a low pass filter. Suitable examples of a high pass filter include a resistor-capacitor circuit, a multi-stage resistor-capacitor circuit, a digital circuit, and/or the like. Suitable examples of a low pass filter include a resistor-inductor circuit, a multi-stage resistor-inductor circuit, a digital circuit, and/or the like.

In some embodiments, the first filter 340A is a low pass filter configured to filter low frequency signals from the first circuit 320A, and the second filter 340B is a high pass filter configured to filter high frequency signals from the second circuit 320B. During use. the filters 340A, 340B can be configured individually or collectively for shared/multiplexed use of the housing 310. In some embodiments, the filter 340A, 340B, the first circuit 320A and the second circuit 320B are configured collectively for shared/multiplexed use of the housing.In some embodiments, the housing 310 can be operated in a first configuration or a second configuration as described for FIG.1. In this manner, the nature of the signals transmitted and/or received by the circuits 320A, 320B, coupled with the filtering specification of the filters 340A, 340B, collectively provide selective access to the housing 310.

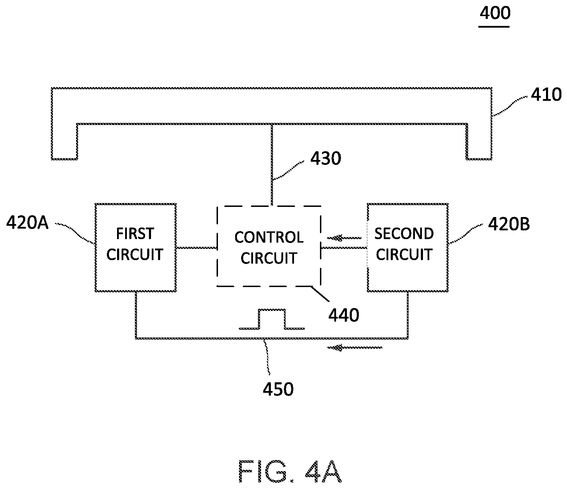

FIGS. 4A-4B illustrate a device 400. according to example embodiments, where the first circuit 420A (e.g., similar to the first circuit 120A) and the second circuit 420B (e.g., similar to the second circuit 120B) are linked/coupled via a communication link 450 that is distinct from a link 430 that couples the first circuit 420A and the second circuit 420B to the housing 410. In some embodiment, the first circuit 420A is a capacitive-touch circuit and the second circuit 420B is a RF circuit.

The link 450 can be a direct link, or an indirect link including one or more components such as, for example, a signal amplifier, a signal converter, a signal filter. and/or the like. As described herein, the device 400 can include additional device components that are coupled to the housing 410, that participate in multiplexed use of the housing 410, and can be coupled via the link 430 as well. In some optional embodiments, the device 400 can include a control circuit 440 disposed between the first circuit 420A and the second circuit 420B. In some embodiments, the communication link 450 passes through the control circuit 440.

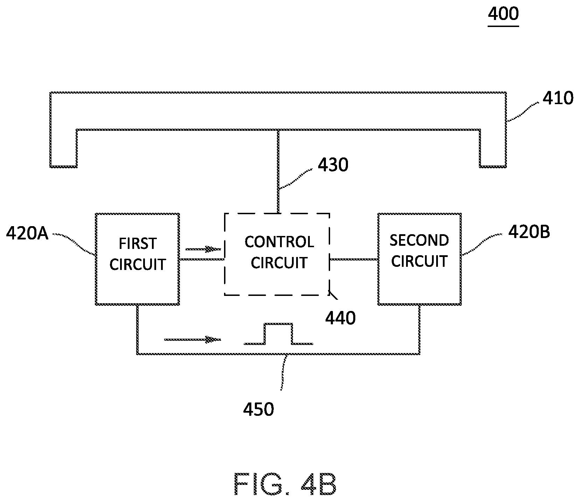

In some embodiments, during use, the first circuit 420A is configured to send a control signal to the second circuit 420B along the link 450. The control signal can include an indication of a request or an assertion that the first circuit 420A assume control of/access the housing 410 (i.e., the housing 410 attains the first configuration), and can additionally/alternatively include an indication of a request or an assertion that the second circuit 420B submit control of/access the housing 410 (see. FIG.4A). Similarly, as best illustrated in FIG.4B, during use, the second circuit 420B is configured to send a control signal to the first circuit 420A along the communication link 450, the control signal including a request or assertion that the second circuit 420B assume control of/access the housing 410, and can additionally/alternatively include an indication of a request or an assertion that the first circuit 420A submit control of/access the housing 410. In embodiments where the communication link 450 passes through the control circuit 440, the control circuit 440 can be configured to enable the transfer of control signals between the first circuit 420A and the second circuit 420B. In some embodiments, the control circuit 440 can control transmission of the control signal via the communication link 450, such as, for example, delay the control signal till a predetermined time (e.g., till the second circuit 420B has finished receiving incoming data), delay the control signal for a predetermined duration, prohibit the control signal from one circuit from reaching the other circuit, and/or the like.

The control signal can be of any suitable electrical and/or electronic form such as, for example, a pulsed voltage signal, a constant voltage signal, one transmitted by a universal asynchronous receiver/transmitter, one transmitted via a serial peripheral interface, and/or the like. In some embodiments, the control signal can be an optical signal. an acoustic signal, and/or the like.

In some embodiments, the housing 410 can attain the first configuration when the first circuit 420A transmits a control signal via the communication link 450 to the second circuit 420B. Similarly, the housing 410 can attain the second configuration when the second circuit 420B transmits a control signal via the communication link 450 to the first circuit 420A. In some embodiments, the control signal can be a continuous signal and the housing 410 can be configured to maintain a particular configuration for the duration of the control signal. In some embodiments, once the housing 410 attains a configuration, say the first configuration, the housing 410 can be configured to maintain the first configuration until a control signal is transmitted from the second circuit 420B to the first circuit 420A via the communication link 450. In some embodiments, the control signal can be a signal pulse and the housing can be configured to maintain a particular configuration for a predetermined duration after the pulse signal is transmitted via the communication link 450. In some embodiments, the control circuit 440 could include software, such as firmware, configured to operate the housing 410 such that once the housing 410 attains a particular configuration, the housing 410 can be maintained in that particular configuration for a predetermined duration of time.

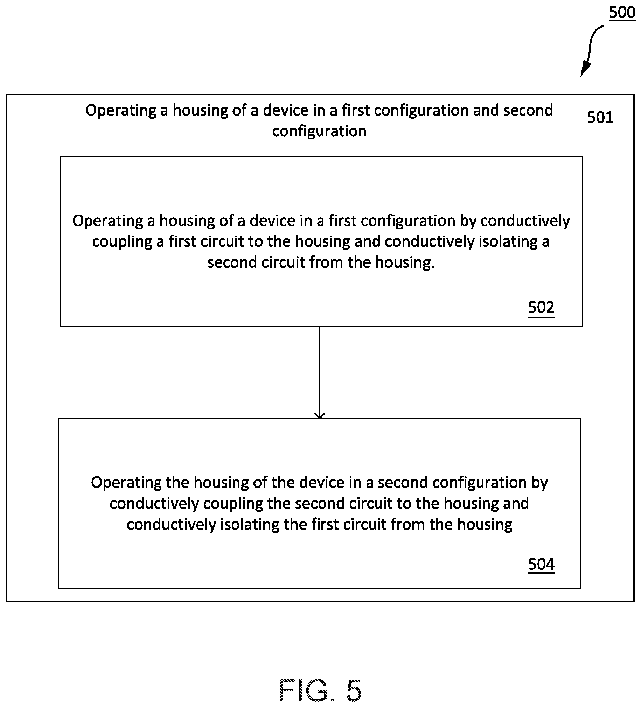

FIG. 5 illustrates a method 500, according to an embodiment. In some embodiments, the method 500 is useful for operating any of the devices 100. 200, 300 and/or 400 disclosed herein. The method includes, at 501, operating the housing of the device in a first configuration or a second configuration. The housing (e.g., the housing 110 in FIG. 1), that is constructed from a conductive material. can be operated in the first configuration or the second configuration. The first and the second configurations are associated with use of the housing. Each of the devices 100, 200, 300 and/or 400 disclosed herein includes a first circuit (e.g., the first circuit 120A in FIG. 1) and a second circuit (e.g., the second circuit 120B in FIG. 1). The step 501 further includes, at 501a, operating the housing in the first configuration by conductively coupling the first circuit to the housing and by conductively isolating second circuit from the housing. The step 501 further includes, at 501b, operating the housing in the second configuration by conductively coupling the second circuit to the housing and by conductively isolating first circuit from the housing.

In some embodiments, operating the housing in the first configuration includes obtaining capacitive touch input from a user. In some embodiments, operating the housing in the second configuration includes obtaining capacitive touch input from a user. In some embodiments, operating the housing in the first configuration includes at least one of transmitting a radio frequency signal and receiving a radio frequency signal. In some embodiments, operating the housing in the second configuration includes at least one of transmitting a radio frequency signal and receiving a radio frequency signal.

In some embodiments. the housing can be operated in one of first configuration or second configuration by obtaining capacitive touch input from a user and operating the housing in the other of first configuration or second configuration by transmitting radio frequency signal and/or receiving radio frequency signal.

In some embodiments. the housing can be operated in the first configuration or second configuration by conductively coupling the housing to a capacitive touch circuit or a radio frequency (RF) transmission circuit and conductively isolating the housing from the other of the capacitive touch circuit or the RF circuit.

In some embodiments, housing can be operated by selecting, via a third circuit (e.g., the control circuit 140 in FIG. 1), one of first configuration or second configuration. The third circuit is conductively coupled to the first circuit, the second circuit and the housing. Additionally, the third circuit includes a control circuit. In some embodiments, selecting one of first configuration or second configuration via the third circuit additionally includes establishing the first configuration by conductively coupling the housing to the first circuit via the third circuit. In some embodiments, selecting one of first configuration or second configuration via the third circuit additionally includes establishing the second configuration by conductively coupling the housing to the second circuit via the third circuit.

In some embodiments, operating the housing in the first configuration or second configuration includes selecting one of the first configuration or the second configuration via a control circuit. The control circuit includes a first filter and a second filter. In some embodiments, selecting one of the first configuration and second configuration includes establishing the first configuration by conductively coupling the first circuit to the housing via the first filter. In some embodiments, selecting one of the first configuration and second configuration includes establishing the second configuration by conductively coupling the second circuit to the housing via the second filter. In some embodiments, one of the first filter and the second filter is a high pass filter, while other of the first filter and the second filter is a low pass filter.

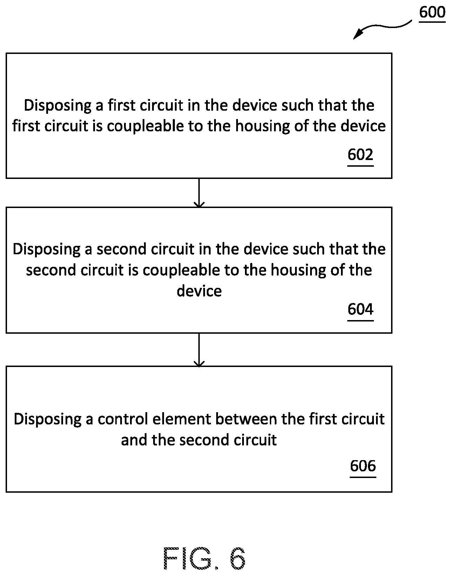

FIG. 6 illustrates a method 600, according to an embodiment. In some embodiments, the method 600 is useful for constructing/assembling any of the devices 100, 200, 300 and/or 400 disclosed herein. The method 600 includes, at 602, disposing a first circuit (e.g., the first circuit 120A in FIG. 1) in a device. The device includes a housing (e.g.. the housing 110 in FIG. 1) constructed from a conductive material. The first circuit is coupleable to the housing. The housing is operable in a first configuration and a second configuration. The first configuration and the second configuration are associated with the use of the housing for conduction. The method 600 also includes, at 604, a second circuit (e.g.. the second circuit 120B in FIG. 1) is disposed in the device such that the second circuit is coupleable to the housing. The method 600 also includes, at 606, a control circuit (e.g., the control circuit 140 in FIG. 1) is disposed between the first circuit and the second circuit. The control circuit, first circuit and the second circuit are collectively configured to operate the housing in first configuration and second configuration. The housing is operated in a first configuration by conductively coupling the first circuit to the housing and by conductively isolating the second circuit from the housing. The housing is operated in a second configuration by conductively coupling the second circuit to the housing and by conductively isolating the first circuit from the housing.

In some embodiments, operating the housing in the first configuration includes obtaining capacitive touch input from a user. In some embodiments, operating the housing in the second configuration includes at least one of transmitting a radio frequency signal and receiving a radio frequency signal. In some embodiments, operating the housing in the second configuration includes obtaining capacitive touch input from a user. In some embodiments, operating the housing in the first configuration includes at least one of transmitting a radio frequency signal and receiving a radio frequency signal.

In some embodiments, the housing can be operated in one of the first configuration or the second configuration by obtaining capacitive touch input from a user and operating the housing in the other of the first configuration or the second configuration by transmitting a radio frequency signal and/or receiving a radio frequency signal.

In some embodiments, the housing can be operated in the first configuration by conductively coupling the housing to a capacitive touch circuit or a radio frequency (RF) transmission circuit and conductively isolating the housing from the other of the capacitive touch circuit or the RF circuit. In some embodiments, the housing can be operated in the second configuration by conductively coupling the housing to a capacitive touch circuit or a radio frequency (RF) transmission circuit and conductively isolating the housing from the other of the capacitive touch circuit or the RF circuit.

In some embodiments, the method 600 further includes transmitting via a communication channel (e.g., the communication link 450 in FIGS. 4A-4B), a first control signal to the second circuit to attain the first configuration, and transmitting, via the communication channel, a second control signal to the first circuit to attain the second configuration. In some embodiments, the communication channel includes the control circuit, and is formed between the first circuit and the second circuit.

In some embodiments, the control signal is a continuous signal and the operating the housing in the first configuration includes maintaining the first configuration for a duration of the first control signal. In some embodiments, the housing can be operated in the first configuration for a predetermined duration after a signal pulse is transmitted via the communication channel. The signal pulse is at least a part of the first control signal. In some embodiments, the housing can be operated in the first configuration until a second control signal is transmitted via the communication channel.

In some embodiments, the method also consists of receiving fitness data from one or more sensors. The fitness data is associated with a user.

In this manner, the conductive housing of a device can be configured for multiple purposes. Enabling different configurations for housing reduces form factor while optimizing the use of the housing.

The device 100, or 200, or 300, or 400 can be in communication with other devices (not shown) via a communication link (not shown) and/or via a network. The communication link can be any suitable means for wireless communication between the devices and other devices, including capacitive, magnetic, optical, acoustic, and/or the like. The communication link can include bidirectional communication and, in some embodiments, any or all communications may be secured (e.g., encrypted) or unsecured, as suitable and as is known in the art.

In some embodiments, the device can be characterized as generally described in U.S. Patent Application No. 14/881,677 ("the '677 application") titled "SYSTEMS, DEVICES, AND METHODS FOR DYNAMIC CONTROL", filed October 13, 2015. In some embodiments, the device is configured for proximity based data transfer of fitness data to another device, as disclosed in U.S. Patent Application No. 14/309,195 ("the '195 application") titled "SYSTEMS AND METHODS FOR DATA TRANSFER", filed June 19, 2014. In some embodiments, the one or more housings described herein can be used to provide connectivity between a power source and one of the device components/ electronic circuits, as disclosed in U.S. Provisional Application No. 62/235.467 ("the '467 application") titled "SYSTEMS, DEVICES AND METHODS OF USING A CONDUCTIVE CASING FOR A BATTERY CONTACT", filed September 30, 2016. In some embodiments, the portion of the housing configured for multiplex use can be different from the portion of the housing that provides connectivity with device components/electronic circuits as described in '467 application.

Some embodiments described herein can relate to a kit including the device. In some embodiments, the kit can include one or more holders for the device. As an example, a kit can include the device, and further include one or more accessories for holding the device such as a necklace, a wrist strap, a belt, a clip, a clasp, and/or the like.

Some embodiments described herein relate to a computer storage product with a non-transitory computer-readable medium (also referred to as a non-transitory processor-readable medium) having instructions or computer code thereon for performing various computer-implemented operations. The computer-readable medium (or processor-readable medium) is non-transitory in the sense that it does not include transitory propagating signals (e.g., a propagating electromagnetic wave carrying information on a transmission medium such as space or a cable). The media and computer code (also referred to herein as code) may be those designed and constructed for the specific purpose or purposes. Examples of non-transitory computer-readable media include, but are not limited to: flash memory, magnetic storage media such as hard disks, optical storage media such as Compact Disc/Digital Video Discs (CD/DVDs). Compact Disc-Read Only Memories (CD-ROMs), magneto-optical storage media such as optical disks, carrier wave signal processing modules, and hardware devices that are specially configured to store and execute program code, such as Application-Specific Integrated Circuits (ASICs), Programmable Logic Devices (PLDs), Read-Only Memory (ROM) and Random-Access Memory (RAM) devices.

Examples of computer code include, but are not limited to, micro-code or micro-instructions, machine instructions, such as produced by a compiler, code used to produce a web service, and files containing higher-level instructions that are executed by a computer using an interpreter. For example, embodiments may be implemented using Java, C++, or other programming languages and/or other development tools.

Where methods and/or schematics described above indicate certain events and/or flow patterns occurring in certain order, the ordering of certain events and/or flow patterns may be modified. Additionally certain events may be performed concurrently in parallel processes when possible, as well as performed sequentially.

## Claims

1. A wearable device (100, 200, 300, 400), comprising:
a cover (110, 210, 310, 410), the cover constructed from a conductive material, the cover operable in a first configuration and in a second configuration, the first configuration and the second configuration associated with use of the cover for conduction, wherein, while operating in the first configuration, the cover is configured to be employed for capacitive touch input by a user of the device, and wherein, while operating in the second configuration, the cover is configured to be employed for at least one of radio frequency transmission and radio frequency reception;
a first circuit (120A, 220A, 320A, 420A) coupleable to the cover and configured as a capacitive touch circuit;
a second circuit (120B, 220B, 320B, 420B) coupleable to the cover and configured as a radio frequency, RF, transmission circuit; and
a control circuit (140, 240, 340, 440) disposed between the first circuit and the second circuit, the control circuit comprising a capacitive element, wherein the capacitive element is configured to sense and analyze a user tapping on the cover to switch the cover between the first and second configurations, and the control circuit is configured to:
operate the cover in the first configuration by conductively coupling the first circuit to the cover and by conductively isolating the second circuit from the cover; and
operate the cover in the second configuration by conductively coupling the second circuit to the cover and by conductively isolating the first circuit from the cover.

2. The device as in any of the preceding claims, wherein the control circuit includes:
a first filter (340A) conductively coupled to the first circuit and to the cover; and
a second filter (340B) conductively coupled to the second circuit and to the cover,
at least one of the first filter and the second filter being a high pass filter, the other of the first filter and the second filter being a low pass filter.

3. The device of claim 2, wherein the high pass filter includes at least one of: a resistor-capacitor circuit, a multi-stage resistor-capacitor circuit, and a digital circuit.

4. The device as in any of claims 2 or 3, wherein the low pass filter includes at least one of: a resistor-inductor circuit, a multi-stage resistor-inductor circuit and a digital circuit.

5. The device of claim 1, further comprising:
a processing circuit configured to receive fitness data from one or more sensors, the fitness data associated with a user of the device.

6. The device of claim 1, wherein the control circuit includes a communication channel (450) formed between the first circuit and the second circuit, and wherein:
the cover is configured to attain the first configuration when the first circuit transmits a first control signal to the second circuit via the communication channel; and
the cover is configured to attain the second configuration when the second circuit transmits a second control signal to the first circuit via the communication channel.

7. The device of claim 6, wherein the first control signal is a continuous signal, and the cover is configured to maintain the first configuration for the duration of the first control signal.

8. The device of claim 6, wherein the first control signal includes a signal pulse, and the cover is configured to maintain the first configuration for a predetermined duration after the signal pulse is transmitted via the communication channel.

9. The device of claim 6, wherein when the cover attains the first configuration, the cover is configured to maintain the first configuration for a predetermined duration thereafter.

10. The device of claim 6, wherein when the cover attains the first configuration, the cover is configured to maintain the first configuration until the second control signal is transmitted via the communication channel.

11. The device as in any of the preceding claims, wherein the cover is a first cover, the device further including a second cover conductively isolated from the first cover.

## Patentansprüche

1. Tragbare Vorrichtung (100, 200, 300, 400), umfassend:
eine Abdeckung (110, 210, 310, 410), wobei die Abdeckung aus einem leitenden Material hergestellt ist, wobei die Abdeckung in einer ersten Konfiguration und in einer zweiten Konfiguration betriebsfähig ist, wobei die erste Konfiguration und die zweite Konfiguration der Verwendung der Abdeckung zur Leitung zugeordnet sind, wobei die Abdeckung, während sie in der ersten Konfiguration betrieben wird, dazu konfiguriert ist, von einem Benutzer der Vorrichtung für kapazitive Berührungseingaben eingesetzt zu werden, und wobei die Abdeckung, während sie in der zweiten Konfiguration betrieben wird, dazu konfiguriert ist, für mindestens eine von Hochfrequenzübertragung und Hochfrequenzempfang eingesetzt zu werden;
eine erste Schaltung (120A, 220A, 320A, 420A), die mit der Abdeckung koppelbar und als kapazitive Berührungsschaltung konfiguriert ist;
eine zweite Schaltung (120B, 220B, 320B, 420B), die mit der Abdeckung koppelbar und als Hochfrequenz-(radio frequency, RF-)Übertragungsschaltung konfiguriert ist; und
eine Steuerschaltung (140, 240, 340, 440), die zwischen der ersten Schaltung und der zweiten Schaltung angeordnet ist, wobei die Steuerschaltung ein kapazitives Element umfasst, wobei das kapazitive Element dazu konfiguriert ist, ein Antippen der Abdeckung durch einen Benutzer zu erfassen und zu analysieren, um die Abdeckung zwischen der ersten und der zweiten Konfiguration umzuschalten, und wobei die Steuerschaltung zu Folgendem konfiguriert ist:
Betreiben der Abdeckung in der ersten Konfiguration durch leitendes Koppeln der ersten Schaltung mit der Abdeckung und durch leitendes Isolieren der zweiten Schaltung von der Abdeckung; und
Betreiben der Abdeckung in der zweiten Konfiguration durch leitendes Koppeln der zweiten Schaltung mit der Abdeckung und durch leitendes Isolieren der ersten Schaltung von der Abdeckung.

2. Vorrichtung nach einem der vorhergehenden Ansprüche, wobei die Steuerschaltung Folgendes beinhaltet:
ein erstes Filter (340A), das leitend mit der ersten Schaltung und mit der Abdeckung gekoppelt ist; und
ein zweites Filter (340B), das leitend mit der zweiten Schaltung und mit der Abdeckung gekoppelt ist,
wobei mindestens eines der ersten Filter und der zweiten Filter ein Hochpassfilter ist, das andere der ersten Filter und der zweiten Filter ein Tiefpassfilter ist.

3. Vorrichtung nach Anspruch 2, wobei das Hochpassfilter mindestens eines der Folgenden beinhaltet: eine Widerstand-Kondensator-Schaltung, eine mehrstufige Widerstand-Kondensator-Schaltung und eine digitale Schaltung.

4. Vorrichtung nach einem der Ansprüche 2 oder 3, wobei das Tiefpassfilter mindestens eines der Folgenden beinhaltet: eine Widerstand-Induktor-Schaltung, eine mehrstufige Widerstand-Induktor-Schaltung und eine digitale Schaltung.

5. Vorrichtung nach Anspruch 1, ferner umfassend:
eine Verarbeitungsschaltung, die dazu konfiguriert ist, Fitnessdaten von einem oder mehreren Sensoren zu empfangen, wobei die Fitnessdaten einem Benutzer der Vorrichtung zugeordnet sind.

6. Vorrichtung nach Anspruch 1, wobei die Steuerschaltung einen Kommunikationskanal (450) umfasst, der zwischen der ersten Schaltung und der zweiten Schaltung gebildet ist, und wobei:
die Abdeckung dazu konfiguriert ist, die erste Konfiguration zu erreichen, wenn die erste Schaltung ein erstes Steuersignal über den Kommunikationskanal an die zweite Schaltung überträgt; und
die Abdeckung dazu konfiguriert ist, die zweite Konfiguration zu erreichen, wenn die zweite Schaltung ein zweites Steuersignal über den Kommunikationskanal an die erste Schaltung überträgt.

7. Vorrichtung nach Anspruch 6, wobei das erste Steuersignal ein kontinuierliches Signal ist und die Abdeckung dazu konfiguriert ist, die erste Konfiguration für die Dauer des ersten Steuersignals aufrechtzuerhalten.

8. Vorrichtung nach Anspruch 6, wobei das erste Steuersignal einen Signalimpuls beinhaltet und die Abdeckung dazu konfiguriert ist, die erste Konfiguration für eine vorbestimmte Dauer nach der Übertragung des Signalimpulses über den Kommunikationskanal aufrechtzuerhalten.

9. Vorrichtung nach Anspruch 6, wobei, wenn die Abdeckung die erste Konfiguration erreicht, die Abdeckung dazu konfiguriert ist, die erste Konfiguration für eine vorbestimmte Dauer danach aufrechtzuerhalten.

10. Vorrichtung nach Anspruch 6, wobei die Abdeckung, wenn sie die erste Konfiguration erreicht, dazu konfiguriert ist, die erste Konfiguration aufrechtzuerhalten, bis das zweite Steuersignal über den Kommunikationskanal übertragen wird.

11. Vorrichtung nach einem der vorhergehenden Ansprüche, wobei die Abdeckung eine erste Abdeckung ist, wobei die Vorrichtung ferner eine zweite Abdeckung beinhaltet, die leitend von der ersten Abdeckung isoliert ist.

## Revendications

1. Dispositif portable (100, 200, 300, 400), comprenant :
un couvercle (110, 210, 310, 410), le couvercle étant construit à partir d'un matériau conducteur, le couvercle pouvant fonctionner dans une première configuration et dans une seconde configuration, la première configuration et la seconde configuration étant associées à l'utilisation du couvercle pour la conduction, dans lequel, pendant le fonctionnement dans la première configuration, le couvercle est configuré pour être utilisé pour une entrée tactile capacitive par un utilisateur du dispositif, et dans lequel, pendant le fonctionnement dans la seconde configuration, le couvercle est configuré pour être utilisé pour au moins l'une d'une transmission de radiofréquence et d'une réception de radiofréquence ;
un premier circuit (120A, 220A, 320A, 420A) pouvant être couplé au couvercle et configuré comme un circuit tactile capacitif ;
un second circuit (120B, 220B, 320B, 420B) pouvant être couplé au couvercle et configuré comme un circuit de transmission radiofréquence, RF ; et
un circuit de commande (140, 240, 340, 440) disposé entre le premier circuit et le second circuit, le circuit de commande comprenant un élément capacitif, dans lequel l'élément capacitif est configuré pour détecter et analyser un utilisateur tapotant sur le couvercle pour commuter le couvercle entre les première et seconde configurations, et le circuit de commande est configuré pour :
faire fonctionner le couvercle dans la première configuration en couplant par conduction le premier circuit au couvercle et en isolant par conduction le second circuit du couvercle ; et
faire fonctionner le couvercle dans la seconde configuration en couplant par conduction le second circuit au couvercle et en isolant par conduction le premier circuit du couvercle.

2. Dispositif selon l'une quelconque des revendications précédentes, dans lequel le circuit de commande comporte :
un premier filtre (340A) couplé en conduction au premier circuit et au couvercle ; et
un second filtre (340B) couplé en conduction au second circuit et au couvercle,
au moins l'un du premier filtre et du second filtre étant un filtre passe-haut, l'autre du premier filtre et du second filtre étant un filtre passe-bas.

3. Dispositif selon la revendication 2, dans lequel le filtre passe-haut comporte au moins l'un d'un circuit résistance-condensateur, d'un circuit résistance-condensateur à plusieurs étages et d'un circuit numérique.

4. Dispositif selon l'une quelconque des revendications 2 ou 3, dans lequel le filtre passe-bas comporte au moins l'un d'un circuit résistance-inducteur, d'un circuit résistance-inducteur à plusieurs étages et d'un circuit numérique.

5. Dispositif selon la revendication 1, comprenant également : un circuit de traitement configuré pour recevoir des données de fitness provenant d'un ou de plusieurs capteurs, les données de fitness étant associées à un utilisateur du dispositif.

6. Dispositif selon la revendication 1, dans lequel le circuit de commande comporte un canal de communication (450) formé entre le premier circuit et le second circuit, et dans lequel :
le couvercle est configuré pour atteindre la première configuration lorsque le premier circuit transmet un premier signal de commande au second circuit par le biais du canal de communication ; et
le couvercle est configuré pour atteindre la seconde configuration lorsque le second circuit transmet un second signal de commande au premier circuit par le biais du canal de communication.

7. Dispositif selon la revendication 6, dans lequel le premier signal de commande est un signal continu, et le couvercle est configuré pour maintenir la première configuration pendant la durée du premier signal de commande.

8. Dispositif selon la revendication 6, dans lequel le premier signal de commande comporte une impulsion de signal, et le couvercle est configuré pour maintenir la première configuration pendant une durée prédéterminée après que l'impulsion de signal est transmise par le biais du canal de communication.

9. Dispositif selon la revendication 6, dans lequel lorsque le couvercle atteint la première configuration, le couvercle est configuré pour maintenir la première configuration pendant une durée prédéterminée par la suite.

10. Dispositif selon la revendication 6, dans lequel lorsque le couvercle atteint la première configuration, le couvercle est configuré pour maintenir la première configuration jusqu'à ce que le second signal de commande est transmis par le biais du canal de communication.

11. Dispositif selon une quelconque revendication précédente, dans lequel le couvercle est un premier couvercle, le dispositif comportant également un second couvercle isolé en conduction du premier couvercle.
